# EUROPEAN PATENT APPLICATION

(11) **EP 0 783 905 A1**
(43) Date of publication of application: **16.07.1997**
(21) Application number: 96309585.6
(22) Date of filing: 31.12.1996
(51) Int. Cl.: A63F 9/22

(54) **Display overlays for TV games**

(30) Priority: 12.01.1996 GB 9600673; 15.05.1996 GB 9610121
(71) Applicant: Gedack, Reinhard, 20251 Hamburg (DE)
(72) Inventor: Gedack, Reinhard, 20251 Hamburg (DE)
(74) Representative: Weatherald, Keith Baynes

(57) **Abstract**

An overlay intended to be placed in contact with the display face of a TV screen has on it a pattern of lines and wedge-shaped areas radiating from a reference point or area, by means of which the display face is subdivided into target areas or lines. When a particular TV programme is being watched, the locations of successive targets on pictures flashed on to the screen, relative to the location of the reference point, are identified and recorded by reference to the pattern of lines.

Although the overlay may be stuck to the display screen temporarily, while the game is being played, by the use of an adhesive, it is preferred to use for the substrate of the overlay a material which generates static electricity from the TV set, so that the overlay may be held in place on the screen by electrostatic forces, and may readily be peeled off.

## Description

This invention relates to display overlays, and particularly to overlays which are intended to be attached temporarily to the screen of a television (TV) set.

In order to extend the uses to which a TV set can be put, it is known to use a TV programme in order to encourage viewers to become contestants for prizes. This is done by transmitting on television a film which is intended to be recorded on a video cassette recorder (VCR). At random intervals, the usual sequence of pictures on the film is interrupted by inserting a few frames showing a scene with a distinct 'target' on it. The period for which that frame or those frames is visible may be too short for the target picture to be consciously viewed. However, if the film has been recorded, the program can be viewed more leisurely and, when an indication is given during showing of the film that a target sequence is imminent, the film can be viewed with generous use of the shuttle and the 'pause' button on the VCR control unit until the target picture is being displayed. In some such films, the target picture has on it a small target area of distinctive appearance. If the viewer can identify the coordinates of a series of targets correctly, and sends them by post or telephone, to an address and telephone number given as part of the film transmission, then he can expect to receive a prize of some description.

Without the benefit of the present invention, the viewer has difficulty in recording or estimating the relative position of the target on the screen, and therefore with enabling the contest organisers to compare his estimate of the target position with their data of each target as transmitted. One of the difficulties is that TV screens cover a wide range of sizes, so that it is not possible to measure distances on a TV screen in order to arrive at a target's coordinates.

A transparent substrate which may be applied to the screen of a TV set is disclosed in GB-A-2 148 675 (Argondizzo *et al*). These known substrates display rectangular frames or displays, and are of portrait or landscape orientation. As such, they would be useless for being used in connection with a target-locating game to be displayed on TV screens of a range of sizes.

A similar objection applies to the game-playing apparatus disclosed in GB-A-2 166 961, which shows an opaque mask of fixed dimensions related to those of the screen on which the mask is to be placed, the mask having viewing apertures in it at predetermined locations. All these known masks have constant dimensions. If any of the known masks were to be used in connection with the game described above, the target area would be in areas of the display or mask which would differ from one TV set to another, depending on the screens' dimensions.

Accordingly the present invention aims at providing an overlay for temporary attachment to the screen of a TV tube, the overlay being such that the TV display is overlain by it and is at least partially visible through it. The overlay has on it a reference (datum) point or area which is to overlie the station logo; some other transmitted mark, or is to be placed over a predetermined point on the screen, such as its centre. An array of lines radiates from the reference area, and the lines or intermediate wedge-shaped areas are referenced so that the line which overlies the target area when the target picture is being displayed, or the area in which the target is positioned, can be uniquely identified. This enables the position of a target area relative to the reference point to be consistently identified irrespective of the size of the screen on which the game is viewed.

Accordingly the present invention provides an overlay which is as claimed in the appended claims.

The present invention will now be described by way of example with reference to the accompanying drawings, in which:
Figure 1 is a view of an overlay of this invention showing an array of lines radiating from a reference area, with the overlay having an indefinite boundary;
Figure 2 is a view of another embodiment of the invention, showing an overlay with a differently-positioned reference area, and with the wedge-shaped areas referenced;
Figure 3 is a view of another embodiment showing an overlay with an array of lines intersecting at a point, which is the intended reference point, and
Figure 4 is a view of a fourth overlay with a semi-display similar to Fig. 3, and with non-radiating lines defining a 'goal-like' area in the upper half of the display area.

In all the illustrated embodiments of the invention, a radiating array of lines 2 dividing the viewed area of the TV screen into wedge-shaped areas is placed on a substrate 4. The substrate 4 may be of a transparent plastics material, such as acetate film, which may become adhered to the TV screen solely by the electrostatic charges normally present on the screen when the TV is in use. Alternatively, the substrate may be of a suitable translucent material, such as tracing paper, of which the opacity is sufficient for the salient features of the display to be viewed, even if a viewer would choose not to keep the overlay in position for normal TV programmes. For substrates which could not adhere to the face of the screen solely by electrostatic forces, it is within the purview of this invention to use small areas of adhesive of suitable tackiness on the back surface of the overlay so as to impart or enhance adhesion of the overlay to the screen.

The overlay normally has letters or other indicia 6 on it so as to differentiate the different target zones 8 or target lines from each other. At least some of these indicia are 'handed', so that the viewer can see from looking at the overlay if it is back-to-front. These indicia may be applied to either surface of the overlay, or even embedded in it. The manner in which they are applied is not part of the subject-matter of the invention, and so will not be described herein in any further detail. A 'target zone' may be an area bounded by two or more lines, but this term may also cover just a line.

Preferably the substrate 4 is in the shape of a rectangle, optionally with rounded corners, and sized so as to cover most of the display area of a conventionally-sized TV screen. Because all TV pictures contain the same information irrespective of size of the display screen, all the overlays of this invention fit on to screens of a range of sizes or dimensions. On most such overlays, the boundary 10 of the overlay is usually all but invisible. When the overlay is applied to a screen considerably larger than the overlay, the viewer is able mentally to extrapolate the lines on the overlay in order to identify the respective line or area defining the position of the target 8 relative to the reference area 12.

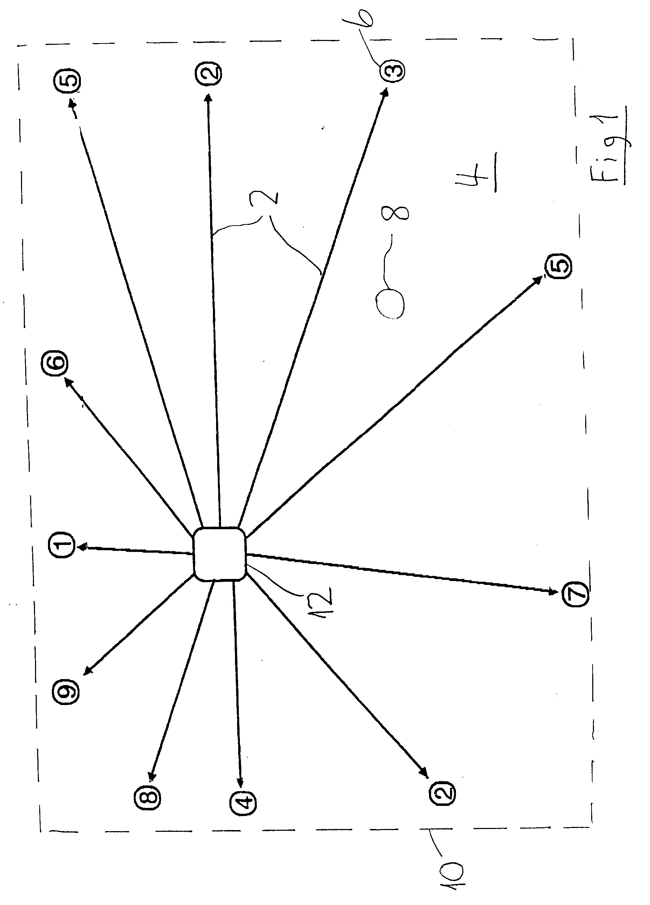

The overlay shown in Fig. 1 is intended to have the small rectangular zone 12 forming the reference or datum area located over a specific part of the screen associated with a recognised datum. In this instance the datum could be a red light transmitted with the target. Each target zone may be identified by the reference numbers of the lines 2, so that the coordinates of a target in area 8 would be 3, 5. If this overlay were to be used with a target situated on a line, as compared with between two lines, then the coordinate of the target would be the number of the line.

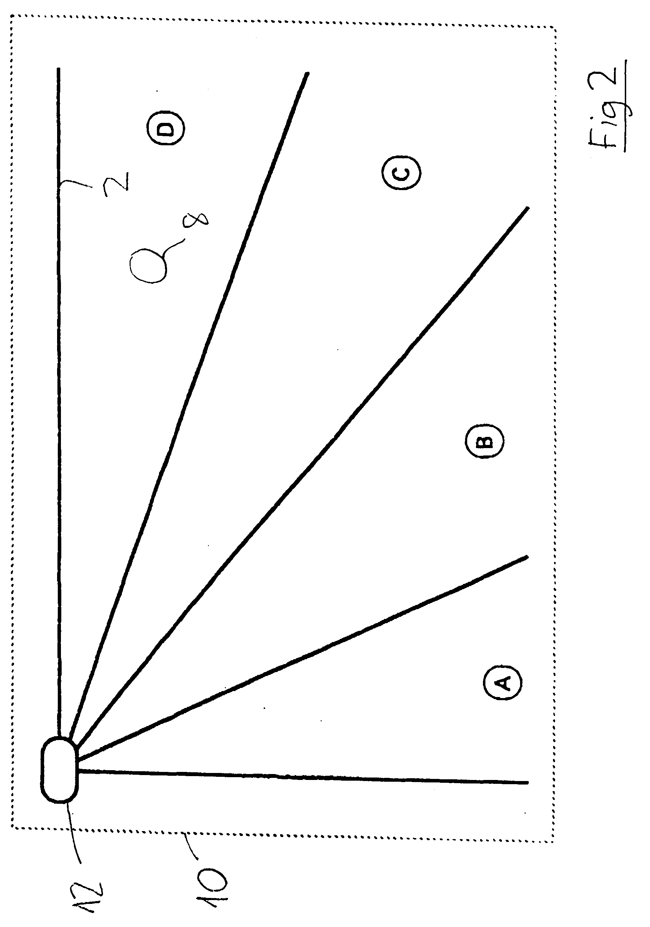

In the overlay of Fig. 2, the reference area 12 is located over the TV station logo situated on one corner of the screen, which some stations transmit permanently. The target 8 is in this instance would be arranged to be always displayed in a wedge-shaped area, to that its position could simply be identified by the single reference letter 6 of the respective wedge-shaped area, such as D.

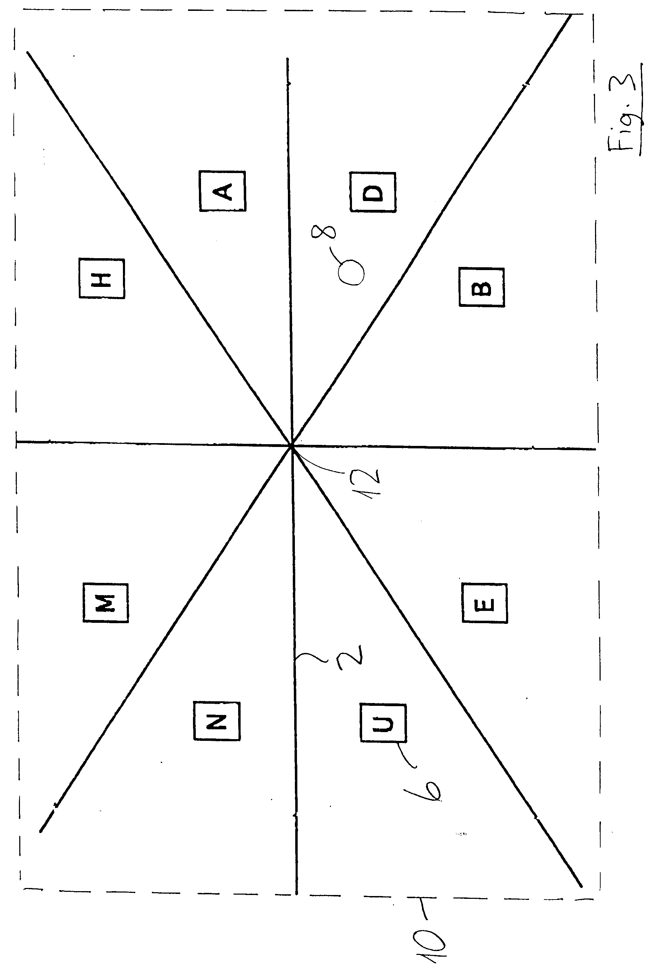

In the overlay of Fig. 3, the reference point is not separately identified, but viewers are instructed to regard the central intersection of the radiating lines 2 as being the reference point 12, which is to be placed over the centre of the screen. The position of the target 8 is given simply by the letter associated with the respective wedge-shaped area, such as D.

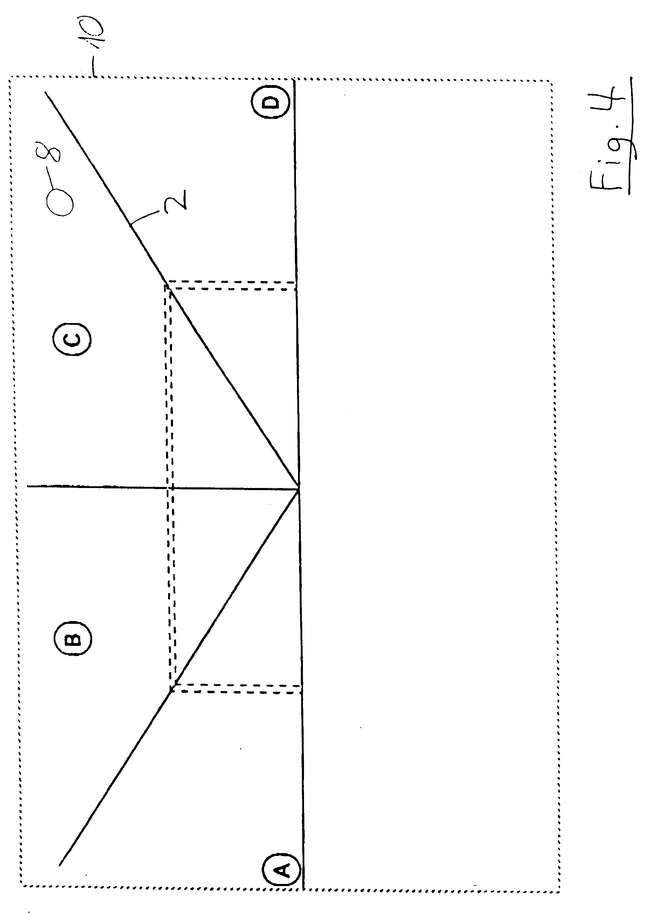

The overlay of Fig. 4 would be used when a game of football is being viewed, and when the game being played by the viewer is based on 'spot-the-ball'. In such a game, all the target areas are in the upper half of the picture, and the target appears in one or other of the target areas A to D. The line 14 extending across the overlay may be treated as being the goal line, for the symbolic goal posts 16. This enables the viewer to ensure that the overlay is aligned relatively to the virtual horizon.

While none of the embodiments shown has a frame forming part of the overlay, this may be provided. The absence of such a frame makes it easier for a viewer to extrapolate a line mentally when the overlay is applied to a screen which is larger than the overlay itself.

It will thus be seen that the present invention provides an overlay which may readily adhere to a TV screen, being stuck thereto by the viewer when he or she is intending to watch a real-time or time-shifted TV programme in order to participate in a game relying on nominating correctly a specified area of, or a line on, the screen. The overlay is intended to be peeled off the screen when the TV is being viewed in order to see normal programmes.

Although the overlays have been described as being used in conjunction with the use of a VCR to locate targets displayed at irregular intervals from the start of a recorded TV program, they may alternatively be in place when a TV program is being viewed in real time. A previously-described target would be displayed for a period taxing the skills of a viewer both to recognise the occurrence of a target and to locate it in a specific part of the screen identified with the help of the overlay. The periods for which the successive targets are displayed may be of different durations to as to provide visual and coordination tests of differing severity.

## Claims

1. An overlay (10) for temporary attachment to the face of a TV screen of indefinite size, comprising an oblong substrate (4) of transparent or translucent material which is intended to be placed against the screen with its longer sides parallel with the top and bottom of the screen, the substrate carrying on one or other surface, or embedded within it, an array of lines (2) and wedge-shaped areas radiating from a reference point or area (12), in which the lines or the areas themselves may be used to identify the position on the screen of a transmitted target area (8) relative to the reference point or area.

2. An overlay as claimed in claim 1, in which the material of the substrate is such as to cause the overlay to adhere to the screen by virtue of the electrostatic forces generated on the substrate when the screen is active.

3. An overlay as claimed in claim 1 or 2, in which the overlay is intended to be adhered to the screen by virtue of adhesive material applied to part of the relevant surface of the overlay.

4. An overlay as claimed in any preceding claim, in which the boundary of the overlay is intended to be of the same size and shape as the screen, or to be congruent thereto when either larger or smaller than the screen.
